# EUROPÄISCHE PATENTANMELDUNG

(11) **EP 3 006 143 A1**
(43) Veröffentlichungstag der Anmeldung: **13.04.2016**
(21) Anmeldenummer: 15188490.5
(22) Anmeldetag: 06.10.2015
(51) Int. Cl.: B23B 31/20

(54) **SPANNFUTTER**

(30) Priorität: 06.10.2014 DE 102014114445; 17.03.2015 DE 202015101365 U
(71) Anmelder: Präzisions-Drehteile Löcher GmbH, 73463 Westhausen (DE)
(72) Erfinder: Löcher, Anton, 73463 Westhausen (DE)
(74) Vertreter: Schmid, Wolfgang

(57) **Zusammenfassung**

Ein Spannfutter (1) zum Spannen von Werkzeugen mit wenigstens annähernd kreisförmigem Querschnitt weist einen Futterkörper (2), welcher einen eine konische Innenfläche (6a) aufweisenden Hohlraum (6) aufweist, eine in dem Hohlraum (6) aufgenommene Spannzange (3), welche eine konische Außenfläche (3a) und eine Ausnehmung (7) zur Aufnahme des Werkzeugs aufweist, und ein Verriegelungselement (4) zum Anpressen der Spannzange (3) an die Innenfläche des Hohlraums (6), um das Werkzeug zu spannen, auf. Das Verriegelungselement (4) ist mittels einer Gewindeverbindung (8) mit dem Futterkörper (2) verbunden. Das Verriegelungselement (4) weist an seiner dem Futterkörper (2) abgewandten Seite eine durch eine Schrägfläche (10a) gebildete Durchmesserverringerung (10) auf. Die Spannzange (3) weist an ihrer dem Futterkörper (2) abgewandten Seite eine mit der Schrägfläche (10a) des Verriegelungselements (4) korrespondierende Schrägfläche (11a) auf. Das Verriegelungselement (4) weist einen Außendurchmesserabschnitt (12) auf, der in einer den Hohlraum (6) des Futterkörpers (2) nach außen verbreiternden Ausnehmung (13) geführt ist.

## Beschreibung

Die Erfindung betrifft ein Spannfutter zum Spannen von Werkzeugen mit wenigstens annähernd kreisförmigem Querschnitt, mit einem Futterkörper, mit einer Spannzange und mit einem Verriegelungselement nach der im Oberbegriff von Anspruch 1 näher definierten Art.

Ein gattungsgemäßes Spannfutter ist in der CH 422 474 A beschrieben. Hierbei ist eine Überwurfmutter vorgesehen, welche auf eine konische Fläche der Spannzange drückt, um dieselbe gegen einen konischen Hohlraum der Spannzange einerseits und gegen das in der Spannzange aufgenommene Werkzeug andererseits zu pressen. Der Nachteil dieser bekannten Lösung liegt insbesondere in deren mangelnder Genauigkeit, wodurch das Werkzeug nicht exakt gespannt werden kann. Beispielsweise bei Fräswerkzeugen kann dies dazu führen, dass dasselbe nicht mit sämtlichen Schneiden mit dem zu bearbeitenden Werkstück in Eingriff ist, so dass keine exakte Bearbeitung möglich und das Werkzeug außerdem einem hohen Verschleiß unterworfen ist.

Aus diesem Grund wurden unter anderem Spannfutter mit Schneckengetrieben zum Spannen des Werkzeugs entwickelt, die jedoch eine sehr aufwändige Fertigung notwendig machen und die Problematik der durch das Spannmittel auftretenden Unwucht nicht vollständig beseitigen können. Als Beispiel für solche Spannfutter mit Schneckengetrieben wird auf die DE 20 2008 013 763 U1 und die EP 1 109 642 B1 verwiesen.

Eine andere Weiterentwicklung stellen Spannfutter dar, welche das Werkzeug ebenfalls in einer Spannzange aufnehmen, das Werkzeug jedoch mittels eines Schrumpfsitzes spannen. Ein Beispiel für ein derartiges Spannfutter kann der EP 1 222 984 B1 entnommen werden. Hierbei wird vor dem Einführen des Werkzeugs die Spannzange erwärmt und anschließend abgekühlt, wodurch sich ihr durch das vorhergehende Erwärmen vergrößerter Durchmesser verringert und das Werkzeug gespannt werden kann.

Nachteilig bei diesen Spannfuttern ist jedoch der sehr große Aufwand und die lange Zeit, die der Ein- und Ausspannvorgang des Werkzeugs in Anspruch nehmen. Auch die Materialermüdung durch das ständige Aufwärmen und Abkühlen des Spannfutters stellt einen großen Nachteil dieser Bauform dar. Darüber hinaus werden für ein solches Spannfutter zusätzliche Anlagen zum Erwärmen desselben benötigt, die eine erhebliche Steigerung der zur Anschaffung des Spannfutters erforderlichen Investitionen nach sich ziehen.

Des Weiteren sind zum Spannen von Werkzeugen mit rundem Querschnitt, wie beispielsweise Fräsern oder Bohrern, in jüngster Zeit häufiger hydraulisch betätigte Spannfutter eingesetzt worden, die jedoch ebenfalls einen sehr hohen Aufwand erfordern und entsprechend teuer sind.

Ein weiteres Spannfutter ist aus der DE 10 2009 046 037 B4 bekannt. Dabei weist die Spannzange in radialer Richtung verlaufende, sich abwechselnde Vertiefungen und Erhebungen auf, was zu einer hohen Elastizität der Spannzange und damit einer guten Spannwirkung führt. Der Nachteil dieses bekannten Spannfutters liegt in dem eine auf eine Schrägfläche der Spannzange wirkende Schließschraube aufweisenden Verriegelungsmechanismus, welcher eine höhere Spanngenauigkeit des Spannfutters verhindert.

Ein weiteres Spannfutter ist aus der DE 361919 bekannt. Dabei werden zwischen dem Futterkörper und dem Verriegelungselement sowie zwischen der Spannzange und dem Verriegelungselement jeweilige Gewindeverbindungen eingesetzt, die unterschiedliche Steigungen aufweisen. Allerdings ergeben sich bei diesem Spannfutter Probleme beim Lösen desselben.

Die DE 10 2009 035 982 A1 beschreibt ein weiteres Spannfutter, das jedoch einen relativ komplizierten Aufbau besitzt.

Ein großes Problem aller bekannter Spannfutter besteht außerdem darin, dass die in dem Umfeld derselben auftretenden Verschmutzungen, wie zum Beispiel Späne, Schmiermittel oder Kühlflüssigkeiten, meist ungehindert in das Innere des Spannfutters eindringen und dort für Ungenauigkeiten oder gar Fehler beim Spannen sorgen können.

Es ist daher Aufgabe der vorliegenden Erfindung, ein Spannfutter zum Spannen von Werkzeugen mit wenigstens annähernd kreisförmigem Querschnitt zu schaffen, das ein exaktes Spannen des Werkzeugs in Verbindung mit einer hohen Spannkraft ermöglicht.

Erfindungsgemäß wird diese Aufgabe durch die in Anspruch 1 genannten Merkmale gelöst.

Durch die Gewindeverbindung zwischen dem Verriegelungselement und dem Futterkörper ergibt sich eine sichere und mit hoher Spannkraft beaufschlagbare Fixierung der Spannzange in dem Futterkörper. Da ständig ein sehr hoher Spanndruck an der Spannzange anliegt, ist ein versehentliches bzw. unbeabsichtigtes Lösen der Spannzange auch während des Einsatzes des Spannfutters nicht möglich.

Des Weiteren wird durch die erfindungsgemäße Lösung ein Verspannen der Spannzange innerhalb des Futterkörpers erreicht, wodurch sich ein sehr exaktes Spannen des Werkzeugs und damit ein entsprechend genauer Rundlauf desselben, der in einem Bereich von unter 0,004 mm liegen kann, ergibt. Durch diese exaktere Spannung des Werkzeugs ist nicht nur eine genauere Bearbeitung mit demselben möglich, sondern es können auch wesentlich höhere Standzeiten erreicht werden, da beispielsweise im Falle eines Fräswerkzeugs sämtliche Schneiden in Eingriff sind, wenn das Werkzeug entsprechend genau gespannt ist. Des Weiteren werden auf diese Weise die Vibrationen des in dem erfindungsgemäßen Spannfutter gespannten Werkzeugs verringert, was ebenfalls zu einer Erhöhung der Standzeit beiträgt.

Ein grundsätzlicher Vorteil der Verwendung eines aus dem Futterkörper ausschraubbaren Verriegelungselements besteht darin, dass es auf diese Weise sehr einfach möglich ist, sowohl das Verriegelungselement als auch die Spannzange aus dem Futterkörper auszubauen und so das gesamte Spannfutter zu reinigen.

Dadurch, dass das Verriegelungselement an seiner dem Futterkörper abgewandten Seite eine Durchmesserverringerung aufweist, kann eine zusätzliche Kraft auf die Spannzange aufgebracht oder zumindest die Spannzange daran gehindert werden, sich von dem Futterkörper zu lösen. Dadurch, dass die Durchmesserverringerung des Verriegelungselements durch eine Schrägfläche gebildet ist und die Spannzange an ihrer dem Futterkörper abgewandten Seite eine mit der Schrägfläche des Verriegelungselements korrespondierende Schrägfläche aufweist, wird über die beiden Schrägflächen eine zusätzliche Kraft auf das eingespannte Werkzeug aufgebracht, wodurch mittels des Verriegelungselements die Spannzange auf sehr einfache Art und Weise in dem Hohlraum des Futterkörpers fixiert werden kann, um das Spannfutter zu schließen und das Werkzeug mit hoher Kraft zu spannen. Durch diese gute Spannung des Werkzeugs werden Bewegungen desselben verhindert, wodurch sich eine Verbesserung der Standzeit desselben ergibt.

Dadurch, dass das Verriegelungselement einen Außendurchmesserabschnitt aufweist, der in einer den Hohlraum des Futterkörpers nach außen verbreiternden Ausnehmung geführt ist, ergibt sich eine Führung des Verriegelungselements gegenüber dem Futterkörper, wodurch sich ein sehr exakter Rundlauf des Spannfutters und eine sehr exakte Spannung des Werkzeugs in demselben erreichen lässt. Dabei wird der Außendurchmesserabschnitt aufgrund der beiden miteinander korrespondierenden Schrägflächen gegen die Ausnehmung gepresst, was erheblich zu dieser hohen Rundlaufgenauigkeit, die letztendlich die Standzeit des in dem erfindungsgemäßen Spannfutter eingespannten Werkzeug weiter erhöht, beiträgt.

Um eine sehr gute Zentrierung des Verriegelungselements innerhalb des Futterkörpers zu erreichen, kann in einer vorteilhaften Weiterbildung der Erfindung vorgesehen sein, dass der Außendurchmesserabschnitt eine umlaufende Erhebung aufweist, welche in der Ausnehmung geführt ist. Auf diese Weise ergibt sich außerdem lediglich eine linienförmige Anlage des Verriegelungselements innerhalb des Futterkörpers, so dass eine geringe Flächenpressung zwischen diesen beiden Bauteilen erreicht wird.

Wenn in diesem Zusammenhang vorgesehen ist, dass die umlaufende Erhebung eine Höhe von 0,005 bis 0,05 mm aufweist, so ist trotz der Erhebung mit ihren oben angegebenen Vorteilen eine ausreichend massive Ausführung des Verriegelungselements möglich.

Um die Montagegenauigkeit des Verriegelungselements innerhalb des Hohlraums des Futterkörpers zu erhöhen, kann des Weiteren vorgesehen sein, dass die umlaufende Erhebung in einem Radius in eine an einer Planfläche der Ausnehmung anliegende Anlagefläche des Verriegelungselements übergeht.

Wenn in einer weiteren vorteilhaften Ausgestaltung die konische Außenfläche der Spannzange einen Konuswinkel von 4 bis 10 Grad aufweist, so ist eine Selbsthemmung der Spannzange in dem Futterkörper gegeben, wodurch sehr hohe auf das gespannte Werkzeug wirkende Spannkräfte erreichbar sind. Das ansonsten bei selbsthemmenden Verbindungen in diesem Winkelbereich auftretende Problem des Lösens der Spannzange aus dem Futterkörper lässt sich durch die oben beschriebene Gegenläufigkeit der Drehrichtungen der Gewindeverbindungen vermeiden.

Eine sehr hohe Genauigkeit der Spannzange kann erreicht werden, wenn die konische Außenfläche und die Ausnehmung der Spannzange in einer Aufspannung gefertigt sind.

In ähnlicher Weise ergibt sich eine sehr hohe Genauigkeit des Futterkörpers, wenn die konische Innenfläche und die Ausnehmung des Futterkörpers in einer Aufspannung gefertigt sind.

Des Weiteren kann vorgesehen sein, dass die Gewindeverbindung ein Innengewinde an dem Futterkörper und ein Außengewinde an dem Verriegelungselement aufweist. Auf diese Weise wird ein verhältnismäßig geringer Durchmesser des Verriegelungselements erreicht, so dass das gesamte Spannfutter einen geringeren Durchmesser aufweisen kann, was letztendlich nicht nur die Masse des Spannfutters verringert, sondern auch die Zufuhr von Kühl- und/oder Schmiermittel zu dem in dem Spannfutter eingespannten Werkzeug vereinfacht.

Ein einfaches Lösen der Spannzange aus dem Hohlraum des Futterkörpers ist möglich, wenn in einer sehr vorteilhaften Weiterbildung der Erfindung ein auf ein Außengewinde der Spannzange aufschraubbares, die Spannzange von der Innenfläche des Hohlraums des Futterkörpers lösendes Abdrückelement vorgesehen ist.

Wenn dabei das Abdrückelement wenigstens zwei Abflachungen zum Eingriff mit einem Werkzeug aufweist, so lässt sich das Abdrückelement besonders einfach gegenüber der Spannzange verdrehen, um dieselbe aus dem Hohlraum des Futterkörpers zu lösen.

Nachfolgend ist ein Ausführungsbeispiel der Erfindung anhand der Zeichnung prinzipmäßig dargestellt.

Es zeigt:
- Fig. 1: eine perspektivische Ansicht eines erfindungsgemäßen Spannfutters;
- Fig. 2: einen Schnitt durch das erfindungsgemäße Spannfutter;
- Fig. 3: eine perspektivische Explosionsansicht des erfindungsgemäßen Spannfutters;
- Fig. 4: eine perspektivische Ansicht der Spannzange des erfindungsgemäßen Spannfutters;
- Fig. 5: eine perspektivische Ansicht des Verriegelungselements des erfindungsgemäßen Spannfutters;
- Fig. 6: eine vergrößerte Ansicht nach der Linie VI aus Fig. 2; und
- Fig. 7: ein Abdrückelement zum Lösen der Spannzange aus dem Futterkörper.

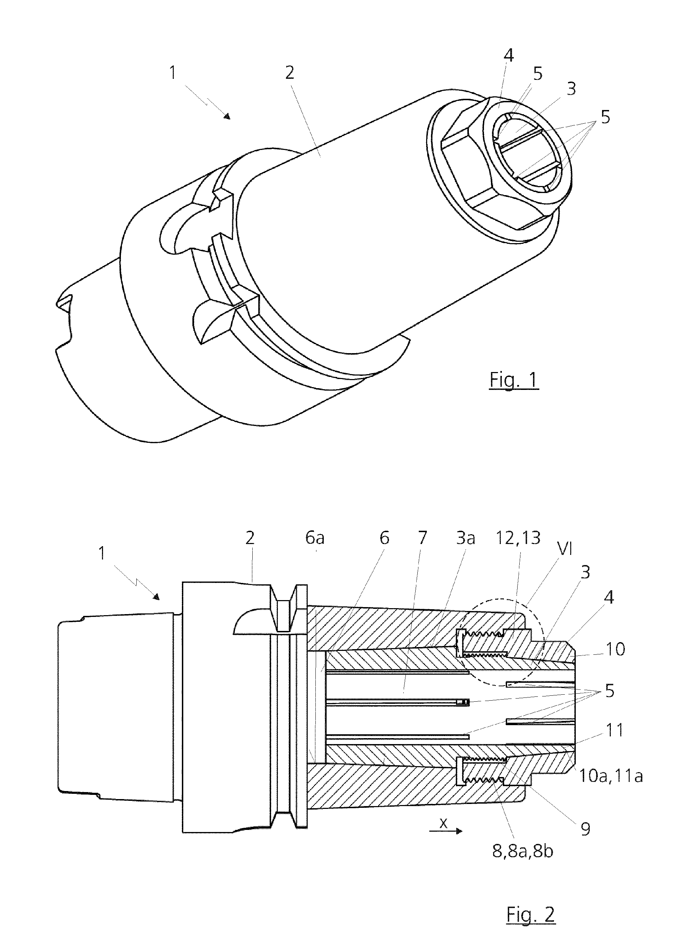

Fig. 1 zeigt in einer perspektivischen Ansicht ein Spannfutter 1, das zum Spannen von nicht dargestellten Werkzeugen dient, die einen wenigstens annähernd kreisförmigen Querschnitt aufweisen. Bei dem Werkzeug kann es sich beispielsweise um einen Fräser, einen Bohrer, einen Gewindebohrer oder ein anderes, insbesondere zur spanenden Bearbeitung eines nicht dargestellten Werkstücks dienendes Werkzeug handeln.

Das Spannfutter 1 weist einen Futterkörper 2 auf, in dem eine Spannzange 3 aufgenommen und mittels eines Verriegelungselements 4 gespannt werden kann. Das Verriegelungselement 4 ist im vorliegenden Fall in der Art einer Mutter ausgeführt und weist einen Sechskant auf, der ein festes Anziehen des Verriegelungselements 4 erlaubt. Die Spannzange 3 weist mehrere, in der in Fig. 2 mit "x" bezeichneten Längsrichtung des Spannfutters 1 verlaufende Schlitze 5 auf, die eine Veränderung des inneren Durchmessers der Spannzange 3 in gewissen Grenzen ermöglichen, um das Werkzeug zu spannen. Da die Schlitze 5 und deren Anordnung an der Spannzange 3 an sich bekannt sind, wird hierin nicht näher darauf eingegangen.

Die Spannzange 3 ist in dem teilweisen Schnitt von Fig. 2 detaillierter zu erkennen. Daraus geht hervor, dass der Futterkörper 2 einen Hohlraum 6 aufweist, der eine konische Innenfläche 6a aufweist und in dem die Spannzange 3 aufgenommen ist. Zur Anlage an der konischen Innenfläche 6a des Hohlraums 6 weist die Spannzange 3 eine konische Außenfläche 3a auf. Im dargestellten Ausführungsbeispiel weist die konische Außenfläche 3a der Spannzange 3 und dementsprechend auch die konische Innenfläche 6a des Hohlraums 6 einen Konuswinkel von 1,5 - 4 Grad auf, wodurch sich eine Selbsthemmung der in dem Hohlraum 6 des Futterkörpers 2 aufgenommenen Spannzange 3 ergibt. Grundsätzlich kann sich, insbesondere wenn mit dem Spannfutter 1 Fräswerkzeuge gespannt werden sollen, der Konuswinkel der konischen Außenfläche 3a und der konischen Innenfläche 6a zwischen 4 und 10 Grad bewegen. Der Konuswinkel entspricht dabei dem Doppelten des Winkels zwischen der konischen Außenfläche 3a bzw. der konischen Innenfläche 6a und einer nicht bezeichneten Mittelachse des Spannfutters 1. Im Falle des Spannens von Spiral- bzw. Wendelbohrern kann auch ein größerer Konuswinkel zum Einsatz kommen, da auf diese Weise größere Durchmesserunterschiede zwischen dem ungespannten und dem gespannten Zustand der Spannzange 3 überbrückt werden können.

In Fig. 2 ist auch die gegenseitige Anordnung des Verriegelungselements 4, der Spannzange 3 und des Futterkörpers 2 zu erkennen. Daraus geht hervor, dass das Verriegelungselement 4 zum Anpressen der Spannzange 3 an die konische Innenfläche 6a des Hohlraums 6 dient, um auf diese Weise das in einer Ausnehmung 7 der Spannzange 3 aufgenommene Werkzeug zu spannen.

Zur Verbindung des Verriegelungselements 4 mit dem Futterkörper 2 dient eine Gewindeverbindung 8, die ein Innengewinde 8a an dem Futterkörper 2 sowie ein Außengewinde 8b an dem Verriegelungselement 4 aufweist. Die Spannzange 3 weist außerdem ein Außengewinde 9 auf, dessen Funktion zu einem späteren Zeitpunkt noch näher erläutert wird. Im Bereich des Außengewindes 9 weist das Verriegelungselement 4 eine glatte Innenfläche auf, sodass das Verriegelungselement 4 in diesem Bereich nicht mit der Spannzange in Gewindeeingriff geht. Die Gewindeverbindung 8 und das Außengewinde 9 weisen im vorliegenden Fall dieselbe Drehrichtung auf und sind beide als Rechtsgewinde ausgeführt. Vorzugsweise wird für die Gewindeverbindung 8 ein Feingewinde eingesetzt.

Um beim Einschrauben des Verriegelungselements 4 in den Futterkörper 2 die Spannzange 3 mit der konischen Außenfläche 3a gegen die konische Innenfläche 6a des Hohlraums 6 des Futterkörpers 2 zu pressen, weist das Verriegelungselement 4 an seiner dem Futterkörper 2 abgewandten Seite eine Durchmesserverringerung 10 auf, die sich im vorliegenden Fall direkt an das Außengewinde 9 anschließt und bis zum vorderen Ende des Verriegelungselements 4 verläuft. Im vorliegenden Fall ist die Durchmesserverringerung 10 des Verriegelungselements 4 durch eine den vorderen Durchmesser des Verriegelungselements 4 verkleinernde konische Fläche bzw. Schrägfläche 10a an dem Verriegelungselement 4 gebildet. Die Spannzange 3 weist an ihrer dem Futterkörper 2 abgewandten Seite eine mit der Schrägfläche 10a des Verriegelungselements 4 korrespondierende Durchmesserverringerung 11 auf, die ebenfalls in Form einer konischen Fläche bzw. Schrägfläche 11a ausgebildet ist, wobei die Winkel der Schrägflächen 10a und 11a, die wiederum als Konuswinkel bezeichnet werden können, miteinander übereinstimmen. Durch die beiden miteinander korrespondierenden Schrägflächen 10a und 11 a wird bei der Bewegung des Verriegelungselements 4 entgegen dem Pfeil "x" aus Fig. 2 die Spannzange 3 an den Futterkörper 2 gepresst. Durch entsprechendes Anziehen des Verriegelungselements 4 über die Gewindeverbindung 8 kann der auf das in der Spannzange 3 gehaltene Werkzeug wirkende Spanndruck aufgrund des Vorhandenseins der konischen Außenfläche 3a und der mit derselben zusammenwirkenden konischen Innenfläche 6a sowie der beiden Schrägflächen 10a und 11 a erhöht werden. Gegebenenfalls kann zum Anziehen des Verriegelungselements 4 auch ein Drehmomentschlüssel eingesetzt werden.

Im Vergleich zu anderen Lösungen ermöglicht die Spannzange 3 das Spannen des Werkzeugs über eine wesentlich größere Länge innerhalb der Spannzange 3, unter anderem auch, da durch die Durchmesserverringerung 10 des Verriegelungselements 4 und die Durchmesserverringerung 11 der Spannzange 3 auch im vorderen Bereich der Spannzange 3 eine sehr gute Spannung des Werkzeugs erzielt werden kann.

Um eine exaktere Zentrierung des Verriegelungselements 4 gegenüber dem Futterkörper 2 und damit auch eine exaktere Zentrierung der Spannzange 3 gegenüber dem Futterkörper 2 zu erreichen, weist das Verriegelungselement 4 einen Außendurchmesserabschnitt 12 auf, der in einer den Hohlraum 6 des Futterkörpers 2 nach außen verbreiternden Ausnehmung 13 geführt ist. Vorzugsweise werden sowohl die Ausnehmung 13 des Futterkörpers 2 als auch der Au-ßendurchmesserabschnitt 12 des Verriegelungselements 4 mit Toleranzen von wenigen Tausendstel µm gefertigt, so dass die Führung des Verriegelungselements 4 in dem Futterkörper 2 sehr exakt ist. In dem Moment, in dem der Außendurchmesserabschnitt 12 des Verriegelungselements 4 beim Verschrauben des Verriegelungselement 4 mit dem Futterkörper 2 über die Gewindeverbindung 8 auf der Planfläche der Ausnehmung 13 des Futterkörpers 2 auftrifft, erfolgt die Verspannung der Spannzange 3 innerhalb des Hohlraums 6 des Futterkörpers 2. Vor dem Spannen der Spannzange 3 über das Verriegelungselement 4 ist also eine Führung des Verriegelungselements 4 innerhalb des Futterkörpers 2 durch die Ausnehmung 13 und den darin geführten Außendurchmesserabschnitt 12 gewährleistet. Des Weiteren wird der Außendurchmesserabschnitt 12 beim Einschrauben des Verriegelungselements 4 durch die beiden miteinander korrespondierenden Schrägflächen 10a und 11a nach außen gegen die Ausnehmung 13 des Futterkörpers 2 gepresst, wodurch das Spiel zwischen dem Verriegelungselement und dem Futterkörper 2 herausgenommen und die Rundlaufgenauigkeit des Spannfutters 1 verbessert wird.

Zu der Genauigkeit des Spannfutters 1 und der Spannung des Werkzeugs in der Spannzange 3 des Spannfutters 1 trägt außerdem die Tatsache bei, dass vorzugsweise die konische Innenfläche 6a des Hohlraums 6 und die Ausnehmung 13 des Futterkörpers 2 in einer Aufspannung gefertigt sind. Des Weiteren ist es zu bevorzugen, die konische Außenfläche 3a und die Ausnehmung 7 der Spannzange 3 ebenfalls in einer Aufspannung zu fertigen.

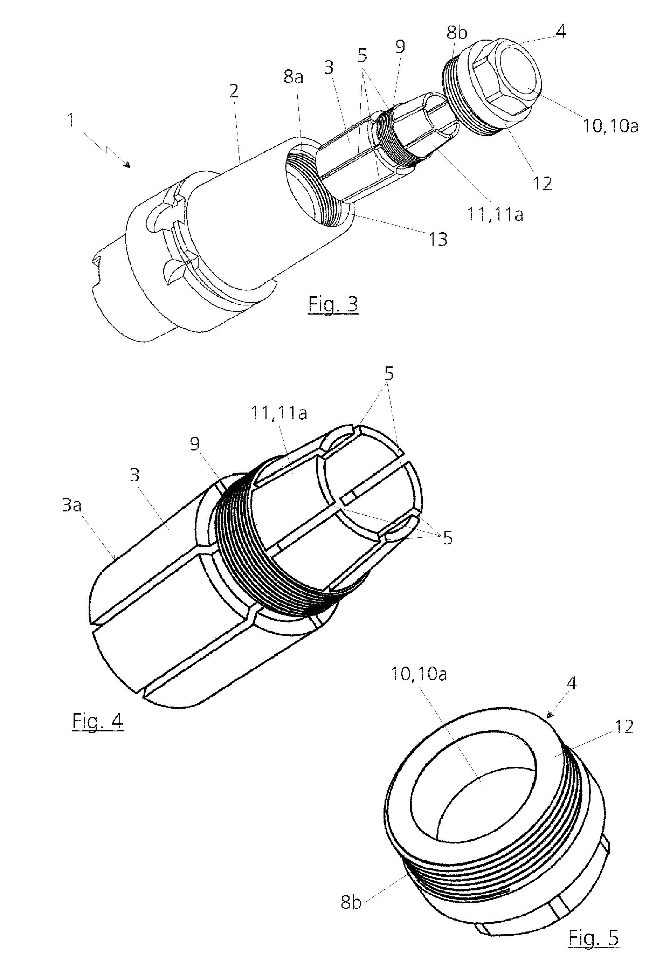

In Fig. 3 ist das Spannfutter 1 in einer perspektivischen Explosionsansicht dargestellt, aus der die Montage des Spannfutters 1 hervorgeht.

In den Figuren 4 und 5 sind nochmals die Spannzange 3 sowie eine andere Ansicht des Verriegelungselements 4 dargestellt.

Für sämtliche Bauteile des Spannfutters 1 kann ein geeigneter Stahlwerkstoff verwendet werden, der vorzugsweise gehärtet wird. Diejenigen Bereiche des Spannfutters 1, bei denen eine besonders hohe Genauigkeit gewünscht wird, können nach dem Härten geschliffen werden. Insbesondere bei geringen Durchmessern der Spannzange 3 kann auch ein Erodierverfahren zum Einsatz kommen.

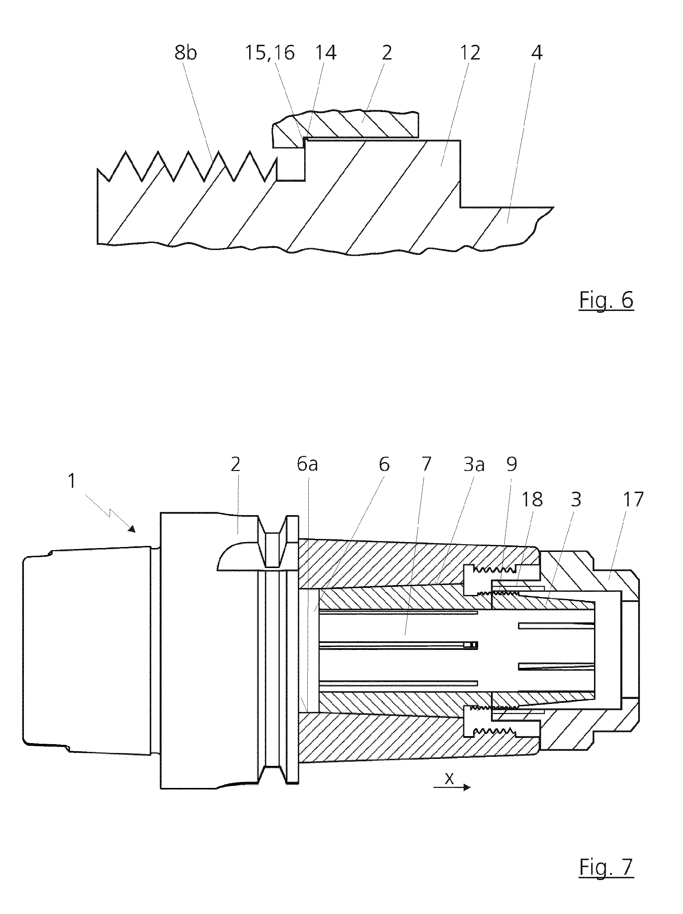

Fig. 6 zeigt eine vergrößerte Ansicht nach der Linie VI aus Fig. 2. Dabei ist erkennbar, dass der Außendurchmesserabschnitt 12 des Verriegelungselements 4 eine umlaufende Erhebung 14 aufweist, über welche das Verriegelungselement 4 in der Ausnehmung 13 des Futterkörpers 2 geführt ist. Die umlaufende Erhebung weist vorzugsweise eine Höhe von 0,005 bis 0,05 mm auf, wodurch derjenige Bereich des Außendurchmesserabschnitts 12, der nicht zu der umlaufenden Erhebung 14 gehört, im montierten Zustand nicht an dem Futterkörper 2 anliegt, da sich aufgrund der umlaufenden Erhebung 14 in diesem Bereich ein Schlitz ergibt. Die Breite des in Fig. 6 erkennbaren Schlitzes zwischen dem Verriegelungselement 4 und dem Futterkörper 2 entspricht dabei der Höhe der umlaufenden Erhebung 14. Durch die umlaufende Erhebung 14 liegt das Verriegelungselement 4 mit dem Außendurchmesserabschnitt 12 lediglich linienförmig an der Ausnehmung 13 des Futterkörpers 2 an, so dass eine exakte Zentrierung des Verriegelungselements 4 in dem Futterkörper 2 erreicht wird und sich außerdem eine geringe Flächenpressung ergibt.

Das Maß der Erhebung 14 ist derart gewählt, dass sich zwischen der Erhebung 14 und der Ausnehmung 13 eine Passung ergibt. Hierbei kann das Verriegelungselement 4, insbesondere im Bereich der umlaufenden Erhebung 14, gehärtet sein. Die Härte des Verriegelungselements 4 kann dabei höher sein als die Härte des vorzugsweise ebenfalls gehärteten Futterkörpers 2.

Die umlaufende Erhebung 14 geht in einem nicht dargestellten Radius in eine an einer Planfläche 15 der Ausnehmung 13 anliegende Anlagefläche 16 des Verriegelungselements 4 über. Dadurch wird ein Druck im Eckbereich der Ausnehmung 13 verhindert. Beispielsweise kann es sich hierbei um einen Radius von 2 mm handeln.

Aufgrund des oben beschriebenen Zusammenwirkens des Außendurchmesserabschnitts 12 und der Ausnehmung 13 kann auf die umlaufende Erhebung 14 auch verzichtet werden.

Fig. 7 zeigt das Spannfutter 1 aus Fig. 2, wobei sich statt des Verriegelungselements 4 ein Abdrückelement 17 in dem Hohlraum 6 des Futterkörpers 2 befindet. Das Abdrückelement 17 weist hierzu ein Innengewinde 18 auf, welches in das Außengewinde 9 der Spannzange 3 eingreift. Dadurch drückt sich, wenn das Abdrückelement 17 im Uhrzeigersinn gegenüber der Spannzange 3 verdreht wird, dasselbe von der vorderen Planfläche des Futterkörpers 2 ab, sodass die Spannzange 3 von der Innenfläche 6a des Hohlraums 6 des Futterkörpers 2 gelöst wird. Die Spannzange 3 wird dabei über ihre an der Innenfläche 6a des Hohlraums 6 anliegende konische Fläche 3a abgehoben. Um das Abdrückelement 17 mit einem nicht dargestellten Werkzeug betätigen zu können, weist das Abdrückelement 17 wenigstens zwei Abflachungen auf, die im vorliegenden Fall Teil eines Sechskants sind.

Gegebenenfalls kann auch auf das Abdrückelement 17 verzichtet werden, dieses bietet jedoch eine einfache Möglichkeit zum Öffnen der Spannzange 3, insbesondere wenn hohe Spannkräfte wirken. Diese auch beim Öffnen der Spannzange 3 relevanten Spannkräfte können durchaus mehr als 100 N betragen.

## Patentansprüche

1. Spannfutter (1) zum Spannen von Werkzeugen mit wenigstens annähernd kreisförmigem Querschnitt, mit einem Futterkörper (2), welcher einen eine konische Innenfläche (6a) aufweisenden Hohlraum (6) aufweist, mit einer in dem Hohlraum (6) aufgenommenen Spannzange (3), welche eine konische Außenfläche (3a) und eine Ausnehmung (7) zur Aufnahme des Werkzeugs aufweist, und mit einem Verriegelungselement (4) zum Anpressen der Spannzange (3) an die Innenfläche des Hohlraums (6), um das Werkzeug zu spannen, wobei das Verriegelungselement (4) mittels einer Gewindeverbindung (8) mit dem Futterkörper (2) verbunden ist,
**dadurch gekennzeichnet, dass**
das Verriegelungselement (4) an seiner dem Futterkörper (2) abgewandten Seite eine durch eine Schrägfläche (10a) gebildete Durchmesserverringerung (10) aufweist, dass die Spannzange (3) an ihrer dem Futterkörper (2) abgewandten Seite eine mit der Schrägfläche (10a) des Verriegelungselements (4) korrespondierende Schrägfläche (11a) aufweist, und dass das Verriegelungselement (4) einen Außendurchmesserabschnitt (12) aufweist, der in einer den Hohlraum (6) des Futterkörpers (2) nach außen verbreiternden Ausnehmung (13) geführt ist.

2. Spannfutter nach Anspruch 1,
**dadurch gekennzeichnet, dass**
der Außendurchmesserabschnitt (12) eine umlaufende Erhebung (14) aufweist, welche in der Ausnehmung (13) geführt ist.

3. Spannfutter nach Anspruch 2,
**dadurch gekennzeichnet, dass**
die umlaufende Erhebung (14) eine Höhe von 0,005 bis 0,05 mm aufweist.

4. Spannfutter nach Anspruch 2 oder 3,
**dadurch gekennzeichnet, dass**
die umlaufende Erhebung (14) in einem Radius in eine an einer Planfläche (15) der Ausnehmung (13) anliegende Anlagefläche (16) des Verriegelungselements (4) übergeht.

5. Spannfutter nach einem der Ansprüche 1 bis 4,
**dadurch gekennzeichnet, dass**
die konische Außenfläche (3a) der Spannzange (3) einen Konuswinkel von 4 bis 10 Grad aufweist.

6. Spannfutter nach einem der Ansprüche 1 bis 5,
**dadurch gekennzeichnet, dass**
die konische Außenfläche (3a) und die Ausnehmung (7) der Spannzange (3) in einer Aufspannung gefertigt sind.

7. Spannfutter nach einem der Ansprüche 1 bis 6,
**dadurch gekennzeichnet, dass**
die konische Innenfläche (6a) und die Ausnehmung (13) des Futterkörpers (2) in einer Aufspannung gefertigt sind.

8. Spannfutter nach einem der Ansprüche 1 bis 7,
**dadurch gekennzeichnet, dass**
die Gewindeverbindung (8) ein Innengewinde (8a) an dem Futterkörper (2) und ein Außengewinde (8b) an dem Verriegelungselement (4) aufweist.

9. Spannfutter nach Anspruch 8,
**gekennzeichnet durch**
ein auf ein Außengewinde (9) der Spannzange (3) aufschraubbares, die Spannzange (3) von der Innenfläche (6a) des Hohlraums (6) des Futterkörpers (2) lösendes Abdrückelement (17).

10. Spannfutter nach Anspruch 9,
**dadurch gekennzeichnet, dass**
das Abdrückelement (17) wenigstens zwei Abflachungen zum Eingriff mit einem Werkzeug aufweist.
